# EUROPEAN PATENT SPECIFICATION

(11) **EP 3 745 749 B1**
(45) Date of publication and mention of the grant of the patent: **11.06.2025**
(21) Application number: 19781626.7
(22) Date of filing: 01.04.2019
(51) Int. Cl.: H04W 4/48, H04H 20/62

(54) **AUDIO PLAYBACK METHOD AND DEVICE**
AUDIOWIEDERGABEVERFAHREN UND -VORRICHTUNG
PROCÉDÉ ET DISPOSITIF DE LECTURE AUDIO

(30) Priority: 02.04.2018 CN 201810282716
(43) Date of publication of application: 02.12.2020
(73) Proprietor: HUAWEI TECHNOLOGIES CO., LTD., Shenzhen, Guangdong 518129 (CN)
(72) Inventor: YU, Shangchun, Shenzhen, Guangdong 518129 (CN)
(74) Representative: Grünecker Patent- und Rechtsanwälte PartG mbB
(86) International application number: PCT/CN2019/080809
(87) International publication number: WO 2019/192426

(56) References cited:
- EP-A1- 1 944 953
- WO-A1-2006/106379
- WO-A1-2008/135672
- CN-A- 105 620 394
- CN-A- 107 264 447
- US-A1- 2007 142 010
- US-A1- 2008 057 888

## Description

### TECHNICAL FIELD

This application relates to the field of terminal technologies, and in particular, to an audio play method and a device.

### BACKGROUND

A smart rearview mirror (also referred to as an in-vehicle navigation cloud mirror) is an electronic product that integrates various functions such as an interior rearview mirror, a dashboard camera, map navigator, voice interaction, music and entertainment, and a wireless connection. The wireless connection may include at least one of a second generation (2nd Generation, 2G)/third generation (3rd Generation, 3G)/fourth generation (4th Generation, 4G) mobile communication connection, a wireless fidelity (Wireless Fidelity, Wi-Fi) connection, and a Bluetooth (Bluetooth, BT) connection. In addition, the smart rearview mirror further has a frequency modulation (Frequency Modulation, FM) transmission function. For example, the smart rearview mirror may send an MP3 (Moving Picture Experts Group Audio Layer-3, MP3) song to a vehicle-mounted device in an FM manner. Then, the vehicle-mounted device receives the MP3 song, completes FM demodulation, and plays the MP3 song by using an acoustic device that has a stereo play effect.

US 2007/0142010 A1 discloses a modulator installed in a vehicle that is configured for adjusting transmission and reception frequencies for transmitting audio data from an external device to a car radio. The modulator may comprise a feedback system for determining the occurrence of interference caused by a radio broadcast station. WO 2008/135672 A1 discloses a device comprising: means for producing a reference signal, means enabling the radio signal to be modulated by the reference signal or by the audio signals received by coupling means, a microphone for capturing acoustic signals present in the environment of the device, and means for analysing the acoustic signals captured by the microphone. Upon receipt of a request, for example an incoming call, the device executes an algorithm for detection of a known signal in a noisy environment, in order to determine the presence or absence of the reference signal in the acoustic signals captured by the microphone. When the reference signal is present in the captured acoustic signals the device transmits a return acceptance signal and when the reference signal is absent from said acoustic signals the device activates an audible and/or visible alarm intended for the user, such that the user can react and perform an action enabling transmission frequency matching to be re-established, for example by adjusting a turn button or pressing a push button for frequency preselection. US 2008/057888 A1 discloses a portable electronic device includes a radio frequency receiver; a radio frequency transmitter; and a processing system coupled with the receiver and transmitter. The processing system directs the receiver to scan a radio frequency spectrum for available radio channels over which the transmitter may transmit. The processing system may further direct the receiver to perform a second scan for radio channels which are actively transmitting information. The processing system then selects an available radio channel as the radio channel best suited for use by the transmitter to transmit information to the external audio system. The processing system may select a transmission frequency which is spectrally distant from the active radio channels and/or may take into account a transmission profile of the transmitter to select a frequency that does not interfere with the reception of incoming radio signals.

A signal undergoing the foregoing FM is transmitted or received after a user manually tuning the smart rearview mirror and the vehicle-mounted device to a same FM frequency. When the smart rearview mirror and the vehicle-mounted device are not tuned to a same FM frequency, the following cases may appear: The vehicle-mounted device does not play an audio signal, or quality of playing an audio signal by the vehicle-mounted device deteriorates, or the vehicle-mounted device plays a program that is of an FM radio station and that is received by the vehicle-mounted device. For example, the user manually tunes the vehicle-mounted device to another FM frequency different from an FM frequency on which the smart rearview mirror operates, or an FM frequency of at least one of the vehicle-mounted device and the smart rearview mirror drifts. This may cause the foregoing cases. In this case, the user needs to manually tune the smart rearview mirror and the vehicle-mounted device to a same FM frequency once again. However, in this case, most users, especially a user who uses the smart rearview mirror for the first time, may think that at least one of the vehicle-mounted device and the smart rearview mirror becomes faulty, and do not know what to do. After the user learns in detail how to use the smart rearview mirror and the vehicle-mounted device by using a method such as reading a user manual, accessing the internet, calling a hotline service, or accessing a WeChat official account, the user finds out a reason and a solution to the foregoing cases. Undoubtedly, it takes the user a large amount of time, causing relatively poor user experience.

### SUMMARY

Embodiments of this application provide an audio play method and a device, to resolve a problem that FM carrier frequency synchronization cannot be automatically implemented between a second device and a first device, and improve reliability in a process in which the first device plays an audio signal by using the second device.

To achieve the foregoing objectives, the embodiments of this application provide the following technical solutions.

According to a first aspect, an audio play method is provided. The method is applied to a first device and a second device. The method comprises:
disabling an audio play function of the first device;
sending, by the first device, a to-be-played audio signal to the second device in a frequency modulation, FM manner, so that the second device plays the to-be-played audio signal;
receiving, by the first device, an audio signal from an environment in which the first device is located; and
if the first device determines that the second device does not operate on the same FM carrier frequency as the first device by determining that the received audio signal does not match the to-be-played audio signal, sending, by the first device, a frequency adjustment request to the second device,
wherein it is determined that the second device does not operate on the same FM carrier frequency as the first device by determining that the received audio signal does not match the to-be-played audio signal when the received audio signal does not include a same signal feature as the to-be-played audio signal, wherein the signal feature includes a waveform feature or a speech content; and wherein the frequency adjustment request comprises an FM carrier frequency on which the first device operates and is used to instruct the second device to implement FM carrier frequency synchronization between the second device and the first device to adjust its FM carrier frequency on which the second device operates to the FM carrier frequency on which the first device operates;
wherein the sending, by the first device, a frequency adjustment request to the second device comprises:
   sending, by the first device, the frequency adjustment request to the second device by using a wireless connection between the first device and the second device, wherein the wireless connection comprises any one of the following connections: a wireless fidelity Wi-Fi connection, a Bluetooth BT connection, a second generation 2G mobile communication connection, a third generation 3G mobile communication connection, a fourth generation 4G mobile communication connection, or a fifth generation 5G mobile communication connection; and
   wherein after the sending, by the first device, a frequency adjustment request to the second device, the method further comprises:
      receiving, by the first device by using the wireless connection, a frequency adjustment response sent by the second device, wherein the frequency adjustment response is used to indicate whether the second device implements the FM carrier frequency synchronization between the second device and the first device according to the frequency adjustment request; and
      wherein
      if the second device implements the FM carrier frequency synchronization between the second device and the first device, the frequency adjustment response carries synchronization success indication information; and if the second device does not implement the FM carrier frequency synchronization between the second device and the first device, the frequency adjustment response carries synchronization failure indication information and the current FM carrier frequency on which the second device operates; and further comprising
      resending, by the first device, if the second device does not implement the FM carrier frequency synchronization between the second device and the first device, a frequency adjustment response based on a difference between the current FM carrier frequency on which the second device operates and the FM carrier frequency on which the first device operates.

According to the audio play method provided in this application, after sending the to-be-played audio signal to the second device in the FM manner, the first device can automatically receive the audio signal from the environment in which the first device is located. If the audio signal received by the first device does not match the to-be-played audio signal, the first device may determine that the second device and the first device do not operate on a same FM carrier frequency. In other words, the second device is in an FM loss of lock state. Then, the first device automatically sends the frequency adjustment request to the second device, so that the second device implements the FM carrier frequency synchronization between the second device and the first device according to the request. This can resolve a problem: When the FM carrier frequency synchronization is not implemented between the second device and the first device, the second device cannot adjust in real time an FM carrier frequency on which the second device operates and implement the FM carrier frequency synchronization between the second device and the first device. This can also improve reliability in a process in which the first device plays an audio signal by using the second device, and requires no user's manual operation, thereby improving user experience.

According to the invention, the frequency adjustment request comprises an FM carrier frequency on which the first device operates.

As an alternative solution for determining whether the FM carrier frequency synchronization is implemented between the second device and the first device, in another possible design method, after the sending, by the first device, a to-be-played audio signal to a second device in a frequency modulation FM manner, the method may further include: buffering, by the first device, the to-be-played audio signal in a first specified time period. Correspondingly, the receiving, by the first device, an audio signal from an environment in which the first device is located may include: receiving, by the first device, the audio signal in a second specified time period from the environment in which the first device is located. The second specified time period and the first specified time period have overlapping duration. Correspondingly, that the first device determines that the received audio signal does not match the to-be-played audio signal may include: determining, by the first device that the audio signal received in the overlapping duration does not match the to-be-played audio signal buffered in the overlapping duration in terms of at least one of the following features: a signal waveform and audio content.

Certainly, in an actual application, a preset duration threshold may be set for the overlapping duration. Only when the overlapping duration is greater than the preset duration threshold and the audio signal received in the overlapping duration matches the to-be-played audio signal buffered in the overlapping duration in terms of the signal waveform and/or the audio content, it is considered that the received audio signal matches the to-be-played audio signal. This can avoid a misjudgment caused because sampling time is excessively short, and improve accuracy and reliability of a determining result.

According to a second aspect, this application provides a device. The device disables an audio play function of the device.
The device comprises a sending module, a receiving module, and a processing module. The sending module is configured to send a to-be-played audio signal to a second device in a frequency modulation FM manner, so that the second device plays the to-be-played audio signal; the receiving module is configured to receive an audio signal from an environment in which the device is located; the processing module is configured to determine whether the second device does operate on the same FM carrier frequency as the first device by determining whether the audio signal received by the receiving module matches the to-be-played audio signal; and the sending module is further configured to: if the processing module determines that the received audio signal does not match the to-be-played audio signal, wherein it is determined that the received audio signal does not match the to-be-played audio signal when the received audio signal does not include a same signal feature as the to-be-played audio signal, wherein the signal feature includes a waveform feature or a speech content, send a frequency adjustment request to the second device, wherein the frequency adjustment request comprises an FM carrier frequency on which the device operates and is used to instruct the second device to implement FM carrier frequency synchronization between the second device and the device to adjust its FM carrier frequency on which the second device operates to the FM carrier frequency on which the device operates; wherein the sending module is further configured to send the frequency adjustment request to the second device by using a wireless connection between the device and the second device, wherein the wireless connection comprises any one of the following connections: a wireless fidelity Wi-Fi connection, a Bluetooth BT connection, a second generation 2G mobile communication connection, a third generation 3G mobile communication connection, a fourth generation 4G mobile communication connection, and a fifth generation 5G mobile communication connection; and wherein the receiving module is configured to receive a frequency adjustment response sent by the second device, wherein the frequency adjustment response is used to indicate whether the second device implements the FM carrier frequency synchronization between the second device and the first device according to the frequency adjustment request; and wherein if the second device implements the FM carrier frequency synchronization between the second device and the first device, the frequency adjustment response carries synchronization success indication information; and if the second device does not implement the FM carrier frequency synchronization between the second device and the first device, the frequency adjustment response carries synchronization failure indication information and the current FM carrier frequency on which the second device operates; and wherein the sending module is further configured to resend, if the second device does not implement the FM carrier frequency synchronization between the second device and the first device, a frequency adjustment response based on a difference between the current FM carrier frequency on which the second device operates and the FM carrier frequency on which the first device operates.

According to the invention, the frequency adjustment request comprises an FM carrier frequency on which the device operates.

In the embodiments of this application, names of the units and modules on the first device and the second device constitute no limitation on the first device and the second device. In actual implementation, these units and modules may have other names, provided that functions of the units and modules are similar to those in the embodiments of this application, that is, the units and modules fall within the scope of the claims of this application and equivalent technologies thereof.

### BRIEF DESCRIPTION OF DRAWINGS

FIG. 1 is a schematic diagram of an application scenario of an audio play method according to an embodiment of this application;
FIG. 2 is a schematic diagram of a user interface of a first device;
FIG. 3 is a schematic structural diagram 1 of a first device;
FIG. 4 is a schematic flowchart 1 of an audio play method comprising some steps of an embodiment of this application;
FIG. 5 is a schematic flowchart 2 of an audio play method comprising some steps of an embodiment of this application;
FIG. 6 is a schematic flowchart 3 of an audio play method comprising some steps of an embodiment of this application;
FIG. 7 is a schematic flowchart 4 of an audio play method comprising some steps of an embodiment of this application;
FIG. 8 is a schematic flowchart 5 of an audio play method according to an embodiment of this application;
FIG. 9A is a schematic structural diagram 2 of a first device;
FIG. 9B is a schematic structural diagram 3 of a first device;
FIG. 10A is a schematic structural diagram 1 of a second device;
FIG. 10B is a schematic structural diagram 2 of a second device;
FIG. 11 is a schematic structural diagram 4 of a first device; and
FIG. 12 is a schematic structural diagram 3 of a second device.

### DESCRIPTION OF EMBODIMENTS AND COMPARATIVE EXAMPLES

The term "and/or" in this specification describes only an association relationship for describing associated objects and represents that three relationships may exist. For example, A and/or B may represent the following three cases: Only A exists, both A and B exist, and only B exists.

In the specification and accompanying drawings of this application, the terms "first", "second", and the like are intended to distinguish between different objects or distinguish between different processing of a same object, but do not indicate a particular order of the objects.

In addition, the terms "including", "containing", or any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in the embodiments of this application, the word "example" or "for example" is used to represent giving an example, an illustration, or a description. Any embodiment or design scheme described as an "example" or "for example" in the embodiments of this application should not be explained as being more preferred or having more advantages than another embodiment or design scheme. Exactly, use of the words "example", "for example", or the like is intended to present a relative concept in a specific manner.

In the description of this application, unless otherwise stated, "a plurality of" means two or more than two.

An audio play method and a device that are provided in the embodiments of this application can implement automatic detection and adjustment of FM carrier frequency synchronization between a second device and a first device. This improves reliability in a process in which the first device plays an audio signal by using the second device, and requires no user's manual operation, thereby improving user experience.

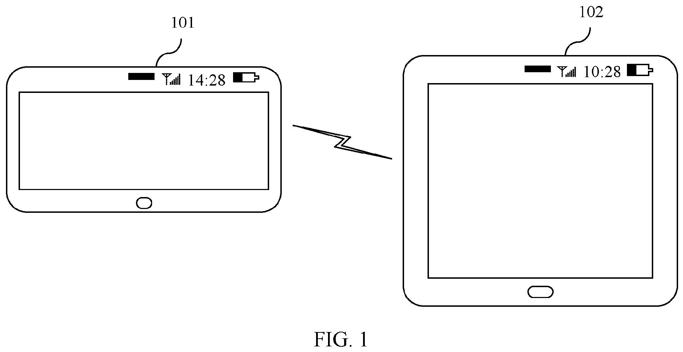

FIG. 1 is a schematic diagram of an application scenario of an audio play method according to an embodiment of this application. As shown in FIG. 1, a first device 101 may be an electronic device such as a smart rearview mirror or a smartphone, and a second device 102 may be an electronic device such as a vehicle-mounted device (including an in-vehicle central control device and an in-vehicle acoustic device) or a smart speaker. An audio play effect of the second device 102 is usually better than an audio play effect of the first device 101. For example, the second device 102 can play music with a stereo effect, but the first device 101 cannot play music with a stereo effect. Specifically, the first device 101 modulates a to-be-played audio signal on a preset FM carrier frequency for transmission. After receiving and demodulating the signal, the second device 102 plays the signal by using an acoustic device of the second device 102.

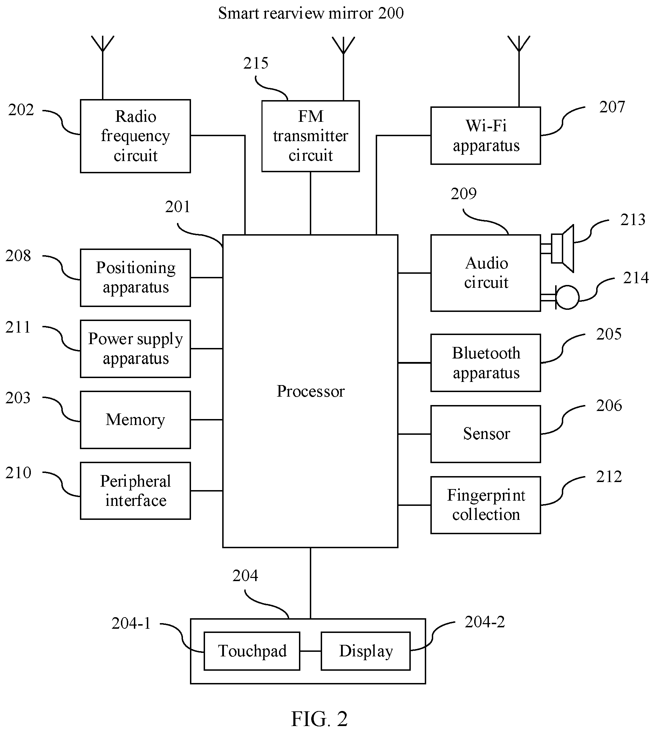

As shown in FIG. 2, the first device 101 may be a smart rearview mirror 200. It should be understood that the smart rearview mirror 200 shown in the figure is merely an example of the first device, and the smart rearview mirror 200 may include more or fewer components than those shown in the figure, or may combine two or more components, or may have different component configurations.

As shown in FIG. 2, the smart rearview mirror 200 may specifically include components such as a processor 201, a radio frequency (Radio Frequency, RF) circuit 202, a memory 203, a touchscreen 204, a Bluetooth apparatus 205, one or more sensors 206, a Wi-Fi apparatus 207, a positioning apparatus 208, an audio circuit 209, a peripheral interface 210, and a power supply apparatus 211. These components may perform communication by using one or more communications buses or signal cables (not shown in FIG. 2). A person skilled in the art may understand that a hardware structure shown in FIG. 2 does not constitute any limitation on the smart rearview mirror, and the smart rearview mirror 200 may include more or fewer components than those shown in the figure, or combine some components, or have different component arrangements.

The following describes the components of the smart rearview mirror 200 in detail with reference to FIG. 2.

The processor 201 is a control center of the smart rearview mirror 200. The processor 201 is connected to parts of the smart rearview mirror 200 by using various interfaces and cables, runs or executes an application stored in the memory 203, and invokes data stored in the memory 203, to perform various functions of the smart rearview mirror 200 and process data. The processor 201 may include one or more processing units. For example, the processor 201 may be a chip Kirin 960 manufactured by Huawei Technologies Co., Ltd. Tthe processor 201 may further include a fingerprint verification chip, configured to verify a collected fingerprint.

The radio frequency circuit 202 may be configured to send and receive a radio signal in an information receiving and sending process or a call process. Particularly, after receiving downlink data from a base station, the radio frequency circuit 202 may send the downlink data to the processor 201 for processing. In addition, the radio frequency circuit 202 sends related uplink data to the base station. Generally, the radio frequency circuit 202 includes but is not limited to an antenna, at least one amplifier, a transceiver, a coupler, a low noise amplifier, a duplexer, and the like. In addition, the radio frequency circuit 202 may further communicate with another device through wireless communication. The wireless communication may use any wireless communications standard or protocol, including but not limited to global system for mobile communications, general packet radio service, code division multiple access, wideband code division multiple access, long term evolution, email, SMS message service, and the like.

The memory 203 is configured to store an application and data. The processor 201 runs the application and the data that are stored in the memory 203, to perform various functions of the smart rearview mirror 200 and process data. The memory 203 mainly includes a program storage area and a data storage area. The program storage area may store an operating system, and an application required by at least one function (for example, a sound playing function and an image playing function). The data storage area may store data (for example, audio data and a phone book) created based on use of the smart rearview mirror 200. In addition, the memory 203 may include a high-speed random access memory (Random Access Memory, RAM), and may further include a nonvolatile memory such as a magnetic disk storage device and a flash memory, or another volatile solid-state storage device. The memory 203 may store various operating systems such as an iOS^{®} operating system developed by Apple and an Android^{®} operating system developed by Google. The memory 203 may be standalone, and is connected to the processor 201 by using the communications bus; or the memory 203 may be integrated with the processor 201.

The touchscreen 204 may specifically include a touchpad 204-1 and a display 204-2.

The touchpad 204-1 may collect a touch event performed by a user on or near the smart rearview mirror 200 (for example, an operation performed by the user on the touchpad 204-1 or near the touchpad 204-1 by using any suitable object such as a finger or a stylus), and send collected touch information to another component (for example, the processor 201). The touch event performed by the user near the touchpad 204-1 may be referred to as a floating touch. The floating touch may mean that the user does not need to directly touch the touchpad for selecting, moving, or dragging an object (for example, an icon), and the user only needs to be near the first device to perform a desired function. In addition, the touchpad 204-1 may be implemented in a plurality of types such as a resistive type, a capacitive type, an infrared type, and a surface acoustic wave type.

The display 204-2 (also referred to as a display screen) may be configured to display information entered by the user or information provided for the user, and menus of the smart rearview mirror 200. The display 204-2 may be configured in a form such as a liquid crystal display or an organic light emitting diode. The touchpad 204-1 may cover the display 204-2. After detecting the touch event on or near the touchpad 204-1, the touchpad 204-1 transmits the touch event to the processor 201 to determine a type of the touch event. Then, the processor 201 may provide a corresponding visual output on the display 204-2 based on the type of the touch event. Although in FIG. 2, the touchpad 204-1 and the display screen 204-2 are used as two independent components to implement input and output functions of the smart rearview mirror 200, the touchpad 204-1 and the display screen 204-2 may be integrated to implement the input and output functions of the smart rearview mirror 200. It may be understood that the touchscreen 204 is formed by stacking a plurality of layers of materials. Only the touchpad (layer) and the display screen (layer) are presented, and other layers are not recorded. In addition, the touchpad 204-1 may be disposed on a front side of the smart rearview mirror 200 in a full panel form, and the display screen 204-2 may also be disposed on the front side of the smart rearview mirror 200 in a full panel form. In this way, a bezel-less structure can be implemented on the front side of the smart rearview mirror.

The smart rearview mirror 200 may further include the Bluetooth apparatus 205, configured to exchange data between the smart rearview mirror 200 and another first device (for example, a smart rearview mirror or a smartwatch) over a short distance. The Bluetooth apparatus may be an integrated circuit, a Bluetooth chip, or the like.

The Wi-Fi apparatus 207 is configured to provide the smart rearview mirror 200 with network access that complies with a Wi-Fi-related standard or protocol. The smart rearview mirror 200 may access a Wi-Fi access point by using the Wi-Fi apparatus 207, to help the user send and receive an email, browse a web page, access streaming media, and the like. The Wi-Fi apparatus 207 provides wireless broadband internet access for the user. The Wi-Fi apparatus 207 may be used as a Wi-Fi wireless access point, and may provide Wi-Fi network access for another first device.

The audio circuit 209, a speaker 213, and a microphone 214 may provide an audio interface between the user and the smart rearview mirror 200. In one aspect, the audio circuit 209 may convert received audio data into an electrical signal and transmit the electrical signal to the speaker 213, and the speaker 213 converts the electrical signal into a sound signal for output. In another aspect, the microphone 214 converts a collected sound signal into an electrical signal, and the audio circuit 209 receives the electrical signal, converts the electrical signal into audio data, and then outputs the audio data to the RF circuit 202, to send the audio data to, for example, another smart rearview mirror, or outputs the audio data to the memory 203 for further processing.

An FM transmitter circuit 215 is configured to modulate an audio signal on a preset FM carrier frequency for transmission. For example, MP3 music locally stored in the smart rearview mirror 200 may be modulated on an FM carrier frequency of 100 MHz, and a modulated FM signal is transmitted.

In addition, the smart rearview mirror 200 may further have a fingerprint recognition function. For example, a fingerprint sensor 212 may be disposed on a back side of the smart rearview mirror 200 (for example, below a rear-facing camera), or a fingerprint sensor 212 is disposed on the front side of the smart rearview mirror 200 (for example, below the touchscreen 204). For another example, the fingerprint collection device 212 may be disposed on the touchscreen 204 to implement the fingerprint recognition function. In other words, the fingerprint collection device 212 may be integrated with the touchscreen 204 to implement the fingerprint recognition function of the smart rearview mirror 200. In this case, the fingerprint collection device 212 may be disposed on the touchscreen 204 as a part of the touchscreen 204, or may be disposed on the touchscreen 204 in another manner. A main component of the fingerprint collection device 212 is a fingerprint sensor. The fingerprint sensor may use any type of sensing technology, which includes but is not limited to an optical sensing technology, a capacitive sensing technology, a piezoelectric sensing technology, an ultrasonic sensing technology, or the like.

The smart rearview mirror 200 may further include at least one type of sensor 206, such as an optical sensor, a motion sensor, and another sensor. Specifically, the optical sensor may include an ambient light sensor and a proximity sensor. The ambient light sensor may adjust luminance of the display of the touchscreen 204 based on intensity of ambient light. The proximity sensor may power off the display when the smart rearview mirror 200 is moved to an ear. As one type of the motion sensor, an accelerometer sensor may detect acceleration values in all directions (usually on three axes). The accelerometer sensor may detect a value and a direction of gravity when the accelerometer sensor is stationary, and may be applied to an application for recognizing a posture (such as switching between landscape mode and portrait mode, a related game, or magnetometer posture calibration) of the smart rearview mirror, a function related to vibration recognition (such as a pedometer or a knock), and the like. Other sensors such as a gyroscope, a barometer, a hygrometer, a thermometer, and an infrared sensor may be further disposed on the smart rearview mirror 200. Details are not described herein.

The positioning apparatus 208 is configured to provide a geographic location for the smart rearview mirror 200. It may be understood that the positioning apparatus 208 may be specifically a receiver of a positioning system such as a global positioning system (Global Positioning System, GPS), a BeiDou navigation satellite system, or Russian GLONASS. After receiving a geographic location sent by the positioning system, the positioning apparatus 208 sends the information to the processor 201 for processing, or sends the information to the memory 203 for storage. The positioning apparatus 208 may alternatively be a receiver of an assisted global positioning system (Assisted Global Positioning System, AGPS). The AGPS system assists the positioning apparatus 208 as an assistance server, to implement ranging and positioning services. In this case, the assisted positioning server communicates with the positioning apparatus 208 (namely, a GPS receiver) of the first device such as the smart rearview mirror 200 by using a wireless communications network, to provide positioning assistance. The positioning apparatus 208 may alternatively be a positioning technology based on a Wi-Fi access point. Because each Wi-Fi access point has a globally unique media access control (Media Access Control, MAC) address, if Wi-Fi is enabled, the first device may scan and collect broadcast signals of nearby Wi-Fi access points. Therefore, the MAC address broadcast by the Wi-Fi access point may be obtained. The first device sends, to a location server by using the wireless communications network, data (for example, the MAC address) that can be used to mark the Wi-Fi access point. The location server finds a geographic location of each Wi-Fi access point, and combines strength of the broadcast signal of the Wi-Fi to calculate a geographic location of the first device and send the geographic location to the positioning apparatus 208 of the first device.

The peripheral interface 210 is configured to provide various interfaces for an external input/output device (for example, a keyboard, a mouse, a display externally connected to the smart rearview mirror 200, an external memory, or a subscriber identity module card). For example, the smart rearview mirror 200 is connected to the mouse by using a universal serial bus (Universal Serial Bus, USB) interface, and the smart rearview mirror 200 is connected, by using a metal contact on a card slot of the subscriber identification module (Subscriber Identification Module, SIM) card, to the subscriber identification module card provided by a telecommunications operator. The peripheral interface 210 may be configured to couple the external input/output peripheral device to the processor 201 and the memory 203.

The smart rearview mirror 200 may further include the power supply apparatus 211 (for example, a battery and a power supply management chip) that supplies power to the components. The battery may be logically connected to the processor 201 by using the power supply management chip, to implement functions such as charging management, discharging management, and power consumption management by using the power supply apparatus 211.

Although not shown in FIG. 2, the smart rearview mirror 200 may further include a camera (a front-facing camera and/or a rear-facing camera), a flash, a micro projection apparatus, a near field communication (Near Field Communication, NFC) apparatus, and the like. Details are not described herein.

It should be noted that a structure of the second device 102 is similar to a structure of the first device. However, the second device 102 needs to receive an FM signal, but does not need to transmit an FM signal. Therefore, different from the first device 101, the second device 102 includes an FM receiver, but may include no FM transmitter 215.

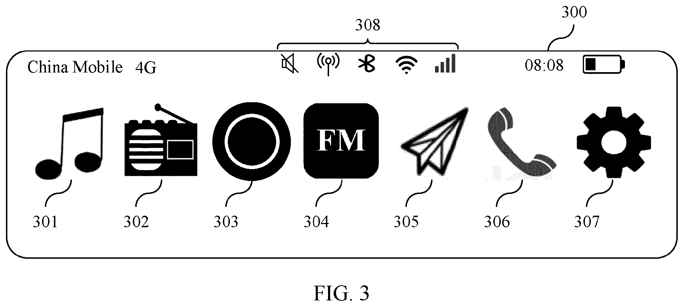

FIG. 3 is a schematic diagram of a graphics user interface (Graphic User Interface, GUI) 300 of the existing first device 101. As shown in FIG. 3, the GUI 300 of the first device may usually display icons of the following application programs: audio play 301, radio 302, dashboard camera 303, FM transmitter 304, navigator 305, and phone 306. If an icon is tapped, an application program corresponding to the icon may be invoked. Certainly, an application program may be used to invoke another application program. For example, the FM transmitter 304 may invoke any application program in the audio play 301, the radio 302, the dashboard camera 303, the navigator 305, and the phone 306, to obtain a to-be-played audio signal. It should be noted that, when the FM transmitter 304 selects a program that is of a radio station and that is received by the radio 302 in an FM manner, as transmission content of the FM transmitter 304, it is better that an FM carrier frequency on which the FM transmitter 304 operates is different from an FM carrier frequency on which the radio 302 operates, to avoid problems that mutual interference is caused when the second device 102 simultaneously receives FM signals that are transmitted by the FM transmitter 304 and the radio station on a same FM carrier frequency and quality of the FM signals received by the second device 102 deteriorates.

In addition, the first device GUI 300 may further include a settings icon 307. On a settings screen (not shown in FIG. 3) displayed after a tap operation, a user can set a speaker, a Wi-Fi hotspot, Bluetooth, a wireless local area network (Wireless Local Area Networks, WLAN), on/off of mobile data service, and the like for the first device 101. Statuses corresponding to the foregoing settings are displayed on the GUI 300 of the first device (corresponding to the reference numeral 308).

Certainly, a GUI of the second device may also be designed in a manner similar to the GUI 300 of the first device. It should be noted that the second device 102 usually does not need to have an FM transmit capability. Therefore, there is usually no icon corresponding to an FM transmitter on the GUI of the second device. In addition, the second device 102 may have some or all functions of the first device 101 other than the FM transmitter, or may have a function different from functions of the first device 101.

It should be noted that the GUI of the second device 102 may be a GUI the same as the GUI 300 of the first device shown in FIG. 3, or may be a GUI different from the GUI 300 of the first device shown in FIG. 3.

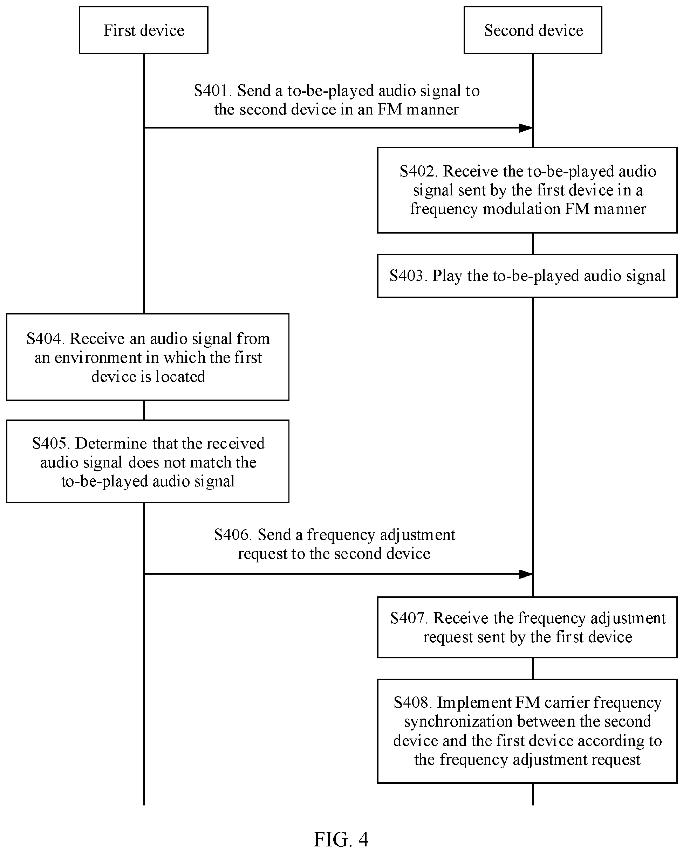

FIG. 4 is a schematic flowchart of an audio play method comprising some steps of to an embodiment of this application. The method is applied to a first device and a second device. The first device disables an audio play function of the first device, and the second device enables an audio play function of the second device. As shown in FIG. 4, the method may include S401 to S408.

S401: The first device sends a to-be-played audio signal to the second device in a frequency modulation FM manner.

The to-be-played audio signal may be from an audio file locally stored in the first device, for example, a local MP3 music file. The to-be-played audio signal may alternatively be an audio signal generated by an application program invoked by the first device, for example, a prompt voice generated by a navigation application program. The to-be-played audio signal may alternatively be another audio signal received by the first device, for example, a program that is of a radio station and that is received by a radio of the first device.

For example, as shown in FIG. 3, the first device 101 modulates the to-be-played audio signal on a preset FM carrier frequency, and transmits the to-be-played audio signal by using an FM transmitter 1012 and an FM transmit antenna 1013.

S402: The second device receives the to-be-played audio signal sent by the first device in the frequency modulation FM manner.

For example, as shown in FIG. 3, the second device 102 receives, by using an FM receive antenna 1021 and an FM receiver 1022, the to-be-played audio signal sent by the first device 101, demodulates the to-be-played audio signal, and sends the to-be-played audio signal to a processor 1023.

S403: The second device plays the to-be-played audio signal.

For example, as shown in FIG. 3, the processor 1023 of the second device 102 plays the to-be-played audio signal by using an audio frequency amplifier 1024 and a loudspeaker 1025.

S404: The first device receives an audio signal from an environment in which the first device is located.

The environment in which the first device is located is a physical location environment in which the first device is located. For example, if the first device is a smart rearview mirror installed inside a vehicle, interior space of the vehicle is the environment in which the first device is located. The audio signal in the environment in which the first device is located may include an audio signal played by the second device, a voice signal of a person inside the vehicle, engine noise, noise generated by an in-vehicle air conditioner, and the like.

For example, that the first device receives an audio signal from an environment in which the first device is located means that the first device collects, by using an audio collection module installed on the first device, the audio signal from the environment in which the first device is located. For example, various sound signals in the environment are collected by using a built-in microphone of the first device or an external microphone connected to the first device.

S405: The first device determines that the received audio signal does not match the to-be-played audio signal.

That the received audio signal does not match the to-be-played audio signal means that the received audio signal includes no audio signal that has a same signal feature as the to-be-played audio signal. Specifically, the signal feature may include a waveform feature of the audio signal and speech content carried in the audio signal.

The waveform feature may include a spectrum and an amplitude of the audio signal. For example, if the to-be-played audio signal is rock music, and signal strength of a bass component in a spectrum graph of the to-be-played audio signal is relatively high, determining may be performed based on a similarity between a spectrum graph of the received audio signal and the spectrum graph of the rock music. Likewise, determining may also be performed based on a similarity between an amplitude envelope curve of the received audio signal and an amplitude envelope curve of the to-be-played audio signal.

The voice content may be a statement and a word that are carried by the audio signal and that are expressed in a form of a natural language. For example, if the to-be-played audio signal is a navigation prompt, for example, "Go straight at the intersection ahead" or "Other vehicles will move to this road at a right side of 200 meters ahead. Please drive with caution", a speech recognition algorithm may be used to determine whether the received audio signal carries the navigation prompt.

It should be noted that, S404 and S405 may be triggered and performed based on an instruction entered by a user, or may be periodically performed. To be specific, S404 and S405 are performed when time of the first device reaches a preset execution period.

S406: The first device sends a frequency adjustment request to the second device.

The frequency adjustment request is used to instruct the second device to implement FM carrier frequency synchronization between the second device and the first device.

For example, the frequency adjustment request may carry an FM carrier frequency on which the first device operates, and the second device may adjust, based on the FM carrier frequency on which the first device operates, a current FM carrier frequency on which the second device operates to the FM carrier frequency on which the first device operates.

In an actual application, there is usually at least one wireless connection between the first device and the second device in, for example, a Wi-Fi connection, a BT connection, and second to fifth generation mobile communication connections. It may be understood that, in a possible design method, that the first device sends a frequency adjustment request to the second device may include:
The first device sends the frequency adjustment request to the second device by using the wireless connection between the first device and the second device.

The wireless connection may include any one of the foregoing wireless connections.

It may be understood that if the received audio signal matches the to-be-played audio signal, the first device does not need to send any information to the second device. This reduces signaling exchange between the first device and the second device and improves efficiency. Certainly, the first device may also send an FM synchronization status indication to the second device.

It should be noted that the first device needs to add information about the FM carrier frequency on which the first device operates, to a wireless signal supported by the wireless connection, and transmit the wireless signal.

S407: The second device receives the frequency adjustment request sent by the first device.

For example, the second device receives, by using the wireless connection between the second device and the first device, the frequency adjustment request sent by the first device.

S408: The second device implements the FM carrier frequency synchronization between the second device and the first device according to the frequency adjustment request.

For example, the second device receives the received wireless signal, parses the received wireless signal to obtain the FM carrier frequency carried in the frequency adjustment request, and then automatically implements the FM carrier frequency synchronization between the second device and the first device based on the FM carrier frequency.

It should be noted that S406 to S408 may also be performed before S401 to S405.

According to the audio play method, after sending the to-be-played audio signal to the second device in the FM manner, the first device can automatically receive the audio signal from the environment in which the first device is located. If the audio signal received by the first device does not match the to-be-played audio signal, the first device may determine that the second device and the first device do not operate on a same FM carrier frequency. In other words, the second device is in an FM loss of lock state. Then, the first device automatically sends the frequency adjustment request to the second device, so that the second device implements the FM carrier frequency synchronization between the second device and the first device according to the request. This can resolve a problem: When the FM carrier frequency synchronization is not implemented between the second device and the first device, the second device cannot adjust in real time an FM carrier frequency on which the second device operates and implement the FM carrier frequency synchronization between the second device and the first device. This can also improve reliability in a process in which the first device plays an audio signal by using the second device, and requires no user's operation, thereby improving user experience.

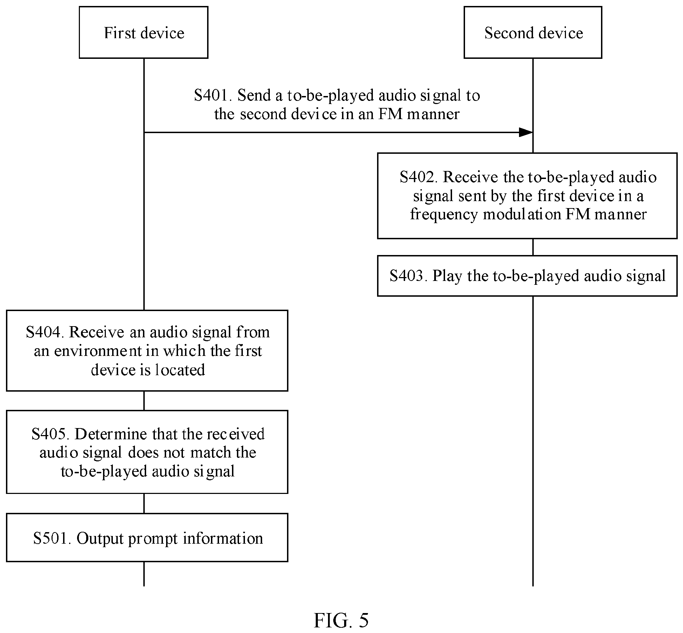

To help the user manually implement the FM carrier frequency synchronization between the second device and the first device or to notify the user that the FM carrier frequency synchronization is not implemented between the second device and the first device, optionally, with reference to FIG. 4, as shown in FIG. 5, after S405 in which the first device determines that the received audio signal does not match the to-be-played audio signal is performed, the method may further include S501.

S501: The first device outputs prompt information.

The prompt information is used to instruct the user to implement the FM carrier frequency synchronization between the second device and the first device, and the prompt information may include at least one of a text, a picture, and a voice.

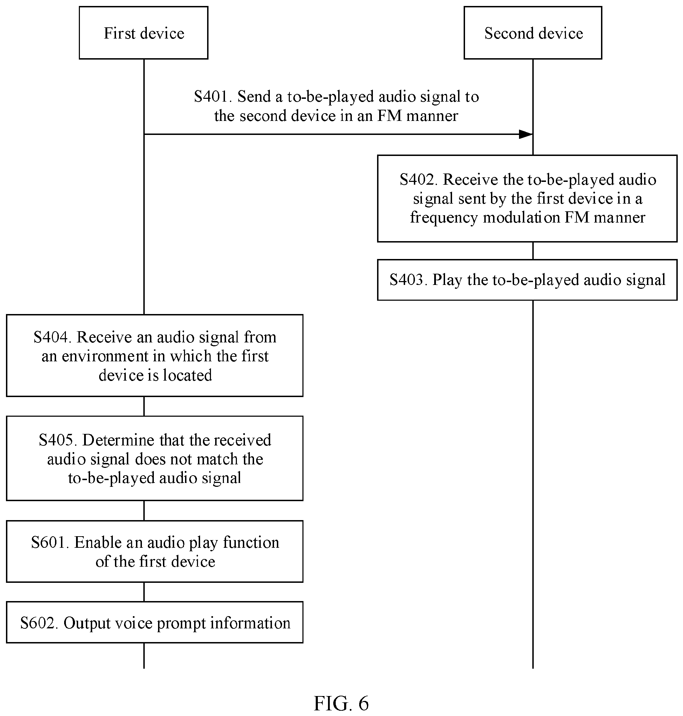

Assume that the prompt information is voice prompt information. For example, with reference to FIG. 5, as shown in FIG. 6, S501 in which the first device outputs prompt information may include S601 and S602.

S601: The first device enables the audio play function of the first device.

S602: The first device outputs voice prompt information.

It should be noted that, because the prompt information is the voice prompt information, the first device first needs to enable the audio play function of the first device, and then outputs the voice prompt information.

For example, the voice prompt information may be used to instruct the user to find a reason why the second device cannot normally play the to-be-played audio signal sent by the first device, and instruct the user to manually implement (for example, manual tuning) the FM carrier frequency synchronization between the second device and the first device. For example, the user may be sequentially instructed to check the second device and manually perform corresponding operations: whether the second device is powered on, whether the FM receiver is enabled, and whether an FM carrier frequency on which the FM receiver operates is set to be the same as a carrier frequency on which the FM transmitter of the first device operates.

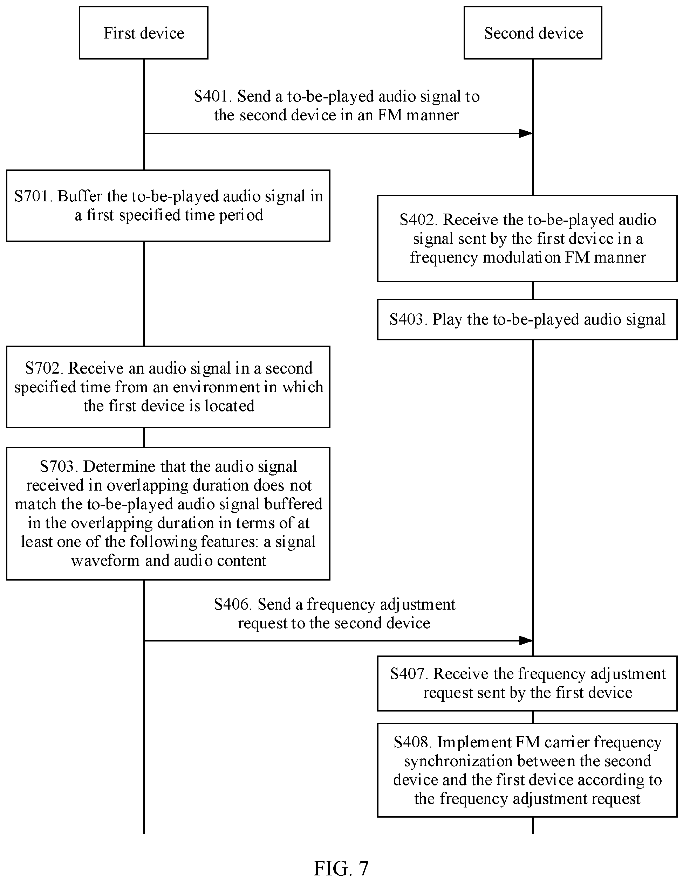

To determine whether the FM carrier frequency synchronization is implemented between the second device and the first device, optionally, with reference to FIG. 4, as shown in FIG. 7, after S401 in which the first device sends a to-be-played audio signal to the second device in a frequency modulation FM manner is performed, the method may further include S701.

S701: The first device buffers the to-be-played audio signal in a first specified time period.

The first specified time period may be determined based on an actual requirement. For example, the first specified time period may be set to 5 minutes, or the first specified time period may be set to 10 minutes.

Correspondingly, S404 in which the first device receives an audio signal from an environment in which the first device is located may include S702 and S703.

S702: The first device receives the audio signal in a second specified time period from the environment in which the first device is located.

Similar to the first specified time period, the second specified time period may also be determined based on an actual requirement.

It should be noted that the second specified time period and the first specified time period need to have overlapping duration.

Correspondingly, S405 in which the first device determines that the received audio signal does not match the to-be-played audio signal may include S703.

S703: The first device determines that the audio signal received in the overlapping duration does not match the to-be-played audio signal buffered in the overlapping duration in terms of at least one of the following features: a signal waveform and audio content.

For example, not matching in terms of the signal waveform may include: A waveform of the to-be-played audio signal before FM modulation does not match a waveform of the audio signal received by the first device.

For example, not matching in terms of the audio content may include: Audio content carried by the to-be-played audio signal does not match audio content carried by the audio signal received by the first device. For example, both the to-be-played audio signal and the audio signal received by the first device carry a navigation voice prompt or lyrics of a same song.

Certainly, in an actual application, a preset duration threshold may be set for the overlapping duration. Only when the overlapping duration is greater than the preset duration threshold and the audio signal received in the overlapping duration matches the to-be-played audio signal buffered in the overlapping duration in terms of the signal waveform and/or the audio content, it is considered that the received audio signal matches the to-be-played audio signal. This can avoid a misjudgment caused because sampling time is excessively short, and improve accuracy and reliability of a determining result.

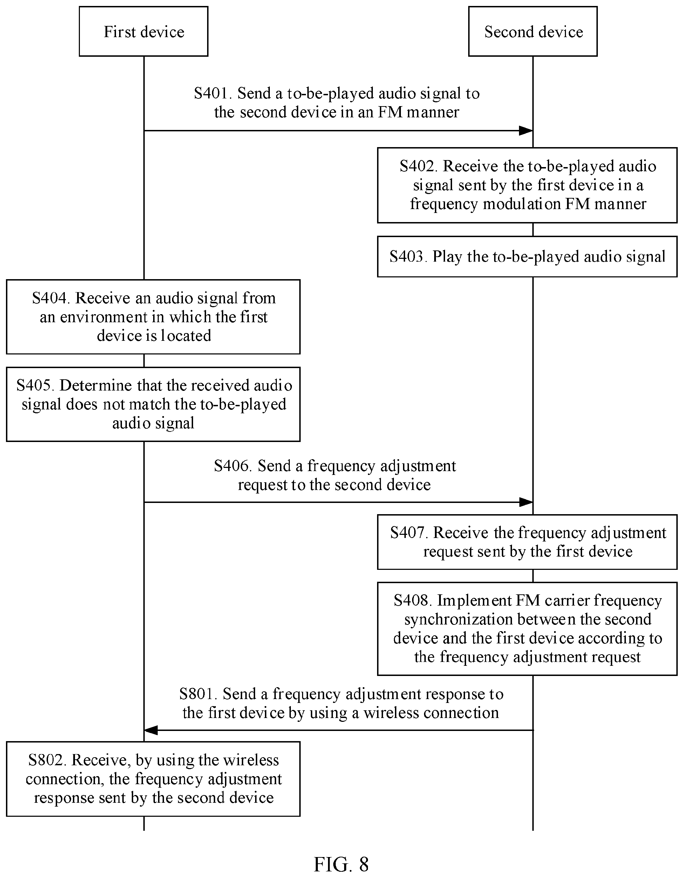

As an alternative solution for determining whether the FM carrier frequency synchronization is implemented between the second device and the first device, optionally, with reference to FIG. 4, as shown in FIG. 8, according to an embodiment, after S408 in which the second device implements the FM carrier frequency synchronization between the second device and the first device according to the frequency adjustment request is performed, the method may further include S801 and S802.

S801: The second device sends a frequency adjustment response to the first device by using the wireless connection.

The frequency adjustment response is mainly used to indicate whether the second device implements the FM carrier frequency synchronization between the second device and the first device according to the frequency adjustment request. According to the invention, if the FM carrier frequency synchronization is implemented, the frequency adjustment response carries synchronization success indication information. And, if the FM carrier frequency synchronization is not implemented, the frequency adjustment response carries synchronization failure indication information and the current FM carrier frequency on which the second device operates. In this case, the first device re-sends a frequency adjustment response based on a difference between the current FM carrier frequency on which the second device operates and the FM carrier frequency on which the first device operates.

Certainly, if a quantity of failure times for implementing the FM carrier frequency synchronization is greater than a preset times threshold, a frequency adjustment response to be sent next time may also carry another FM carrier frequency different from a previously carried FM carrier frequency. For example, if an FM carrier frequency carried in the current frequency adjustment response is 100 megahertz (Mega Hertz, MHz), an FM carrier frequency carried in a next frequency adjustment response may be 95 MHz.

S802: The first device receives, by using the wireless connection, the frequency adjustment response sent by the second device, so that the first device can directly determine, based on the frequency adjustment response, an FM carrier frequency carried in a next frequency adjustment request. This reduces workloads of the first device for collecting an audio signal from the environment in which the first device is located and matching the audio signal with the to-be-played audio signal sent by the first device, and improves audio play reliability and efficiency.

The first device and the second device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. Division into the modules is an example, and is merely a logical function division. In an actual implementation, another division manner may be used.

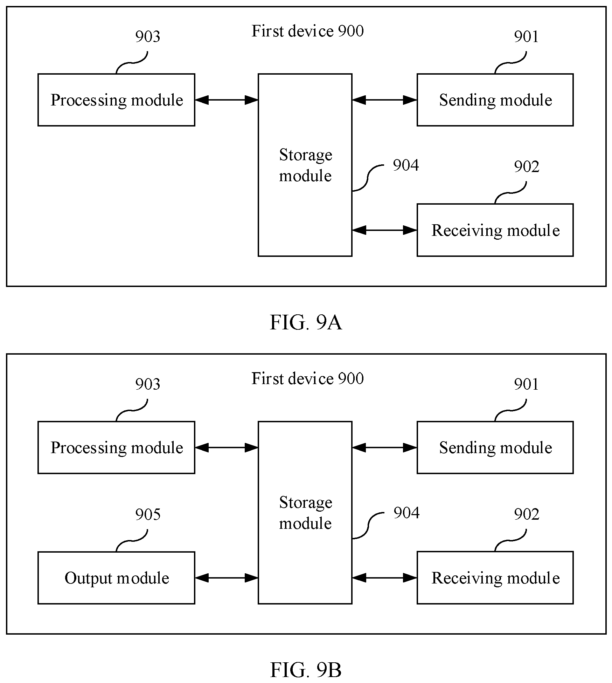

FIG. 9A is a possible schematic structural diagram of the first device. The first device disables an audio play function of the first device. As shown in FIG. 9A, the first device may include a sending module 901, a receiving module 902, and a processing module 903.

The sending module 901 is configured to send a to-be-played audio signal to a second device in a frequency modulation FM manner, so that the second device plays the to-be-played audio signal.

The receiving module 902 is configured to receive an audio signal from an environment in which the first device is located.

The processing module 903 is configured to determine whether the audio signal received by the receiving module 902 matches the to-be-played audio signal.

The sending module 901 is further configured to: if the processing module 903 determines that the received audio signal does not match the to-be-played audio signal, send a frequency adjustment request to the second device. The frequency adjustment request is used to instruct the second device to implement FM carrier frequency synchronization between the second device and the first device.

In addition, the first device may further include a storage module 904, configured to store an instruction and data.

For example, the frequency adjustment request may carry an FM carrier frequency on which the first device operates.

All related content of the steps in the foregoing methods may be cited in function descriptions of the corresponding functional modules of the first device shown in any one of FIG. 4 to FIG. 8. Details are not described herein again.

Optionally, with reference to FIG. 9A, as shown in FIG. 9B, the first device may further include an output module 905.

The output module 905 is configured to output prompt information. The prompt information may include at least one of a text, a picture, and a voice, and the prompt information is used to instruct a user to implement the FM carrier frequency synchronization between the second device and the first device. For example, the output module 905 may be at least one of a speaker and a display of the first device.

Optionally, the processing module 903 is further configured to enable the audio play function of the first device.

The output module 905 is further configured to output voice prompt information.

Optionally, the sending module 901 is further configured to send the frequency adjustment request to the second device by using a wireless connection between the first device and the second device. The wireless connection may include any one of the following connections: a wireless fidelity Wi-Fi connection, a Bluetooth BT connection, a second generation 2G mobile communication connection, a third generation 3G mobile communication connection, a fourth generation 4G mobile communication connection, and a fifth generation 5G mobile communication connection.

Optionally, the receiving module 902 is further configured to receive, by using the wireless connection, a frequency adjustment response sent by the second device. The frequency adjustment response is used to indicate whether the second device implements the FM carrier frequency synchronization between the second device and the first device according to the frequency adjustment request.

Optionally, the processing module 903 is further configured to buffer the to-be-played audio signal in a first specified time period.

The receiving module 902 is further configured to receive the audio signal in a second specified time period from the environment in which the first device is located. The second specified time period and the first specified time period have overlapping duration.

The processing module 903 is further configured to determine that the audio signal received in the overlapping duration does not match the to-be-played audio signal buffered in the overlapping duration in terms of at least one of the following features: a signal waveform and audio content.

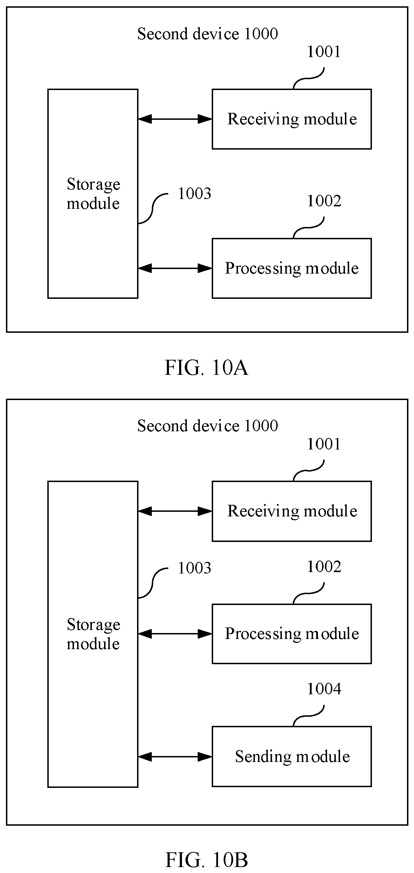

FIG. 10A is a possible schematic structural diagram of the second device. The second device enables an audio play function of the second device. As shown in FIG. 10A, the second device 1000 may include a receiving module 1001 and a processing module 1002.

The receiving module 1001 is configured to receive a to-be-played audio signal sent by a first device in a frequency modulation FM manner.

The processing module 1002 is configured to play the to-be-played audio signal.

The receiving module 1001 is further configured to receive a frequency adjustment request sent by the first device. The frequency adjustment request is used to instruct the second device to implement FM carrier frequency synchronization between the second device and the first device.

The processing module 1002 is further configured to implement the FM carrier frequency synchronization between the second device and the first device according to the frequency adjustment request.

In addition, the second device 1000 may further include a storage module 1003, configured to store an instruction and data.

All related content of the steps in the foregoing methods may be cited in function descriptions of the corresponding functional modules of the second device shown in any one of FIG. 4 to FIG. 8. Details are not described herein again.

Optionally, the receiving module 1001 is further configured to receive, by using a wireless connection between the second device and the first device, the frequency adjustment request sent by the first device. The wireless connection may include at least one of the following connections: a wireless fidelity Wi-Fi connection, a Bluetooth BT connection, a second generation 2G mobile communication connection, a third generation 3G mobile communication connection, a fourth generation 4G mobile communication connection, and a fifth generation 5G mobile communication connection.

Optionally, with reference to FIG. 10A, as shown in FIG. 10B, the second device may further include a sending module 1004.

The sending module 1004 is configured to send a frequency adjustment response to the first device by using the wireless connection. The frequency adjustment response is used to indicate whether the second device implements the FM carrier frequency synchronization between the second device and the first device according to the frequency adjustment request.

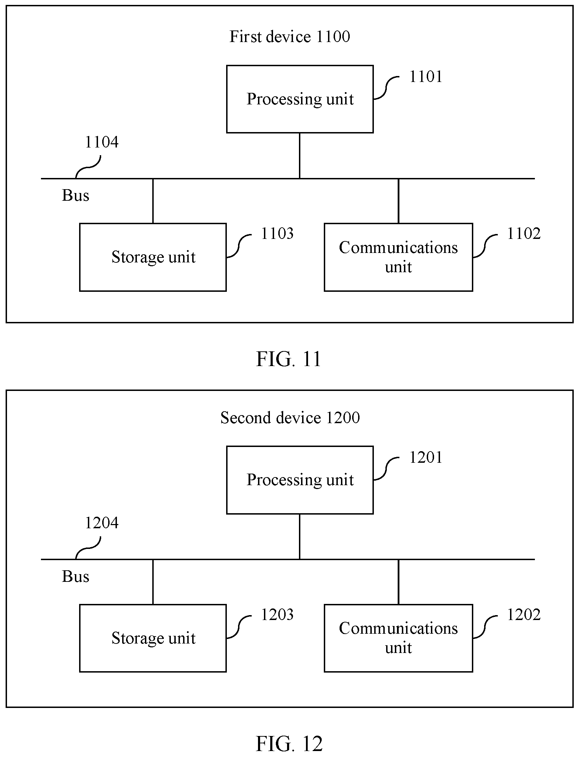

FIG. 11 is another possible schematic structural diagram of the first device. As shown in FIG. 11, the first device may include a processing unit 1101, a communications unit 1102, and a storage unit 1103. The storage unit 1103 is configured to store a computer-executable instruction. The processing unit 1101, the communications unit 1102, and the storage unit 1103 are connected by using a bus 1104. When the first device runs, the processing unit 1101 executes the computer-executable instruction stored in the storage unit 1103, to enable the first device to perform the audio play method illustrated in any one of FIG. 4 to FIG. 8 and various optional implementations of FIG. 4 to FIG. 8.

The processing unit 1101 may be a processor or a controller on the first device. For example, the processing unit 1101 may be the processor 201 shown in FIG. 2. The processor or the controller may implement or execute various example logical blocks, modules, and circuits described with reference to content disclosed in this application. The processor or the controller may be a central processing unit, a general-purpose processor, a digital signal processor, an application-specific integrated circuit, a field programmable gate array or another programmable logic device, a transistor logic device, a hardware component, or any combination thereof. The processor or the controller may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor.

The communications unit 1102 may be a transceiver, a transceiver circuit, a communications interface, or the like on the first device. For example, the communications unit 1102 may be at least one of the radio frequency circuit 202, the Wi-Fi apparatus 207, the Bluetooth 205, the peripheral interface 210, the FM transmitter circuit 215, and the touchscreen 204 that are shown in FIG. 2.

The storage unit 1103 may be a memory or the like on the first device. For example, the storage unit 1103 may be the memory 203 shown in FIG. 2. The memory may include a volatile memory, for example, a random access memory. The memory may also include a non-volatile memory, for example, a read-only memory, a flash memory, a hard disk, or a solid-state drive. The memory may also include a combination of the foregoing types of memories.

The bus 1104 may be an extended industry standard architecture (Extended Industry Standard Architecture, EISA) bus or the like. The bus 1104 may be classified into an address bus, a data bus, a control bus, and the like. For ease of representation, the bus is represented by using only one bold line in FIG. 11. However, this does not mean that there is only one bus or only one type of bus.

FIG. 12 is another possible schematic structural diagram of the second device. As shown in FIG. 12, the second device may include a processing unit 1201, a communications unit 1202, and a storage unit 1203. The storage unit 1203 is configured to store a computer-executable instruction. The processing unit 1201, the communications unit 1202, and the storage unit 1203 are connected by using a bus 1204. When the second device runs, the processing unit 1201 executes the computer-executable instruction stored in the storage unit 1203, to enable the second device to perform the audio play method illustrated in any one of FIG. 4 to FIG. 8 and various optional implementations of FIG. 4 to FIG. 8.

The processing unit 1201 may be a processor or a controller on the second device. For example, the processing unit 1201 may be the processor 201 shown in FIG. 2. The processor or the controller may implement or execute various example logical blocks, modules, and circuits described with reference to content disclosed in this application. The processor or the controller may be a central processing unit, a general-purpose processor, a digital signal processor, an application-specific integrated circuit, a field programmable gate array or another programmable logic device, a transistor logic device, a hardware component, or any combination thereof. The processor or the controller may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor.

The communications unit 1202 may be a transceiver, a transceiver circuit, a communications interface, or the like on the second device. For example, the communications unit 1202 may be at least one of the radio frequency circuit 202, the Wi-Fi apparatus 207, the Bluetooth 205, the peripheral interface 210, the FM transmitter circuit 215, and the touchscreen 204 that are shown in FIG. 2.

The storage unit 1203 may be a memory or the like on the second device. For example, the storage unit 1203 may be the memory 203 shown in FIG. 2. The memory may include a volatile memory, for example, a random access memory. The memory may also include a non-volatile memory, for example, a read-only memory, a flash memory, a hard disk, or a solid-state drive. The memory may also include a combination of the foregoing types of memories.

The bus 1204 may be an extended industry standard architecture (Extended Industry Standard Architecture, EISA) bus or the like. The bus 1204 may be classified into an address bus, a data bus, a control bus, and the like. For ease of representation, the bus is represented by using only one bold line in FIG. 12. However, this does not mean that there is only one bus or only one type of bus.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions in the embodiments of this application are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid-state drive (Solid State Disk, SSD)), or the like.

The foregoing descriptions are merely specific implementations of the present invention, but are not intended to limit the protection scope of the present invention. Therefore, the protection scope of the present invention shall be subject to the protection scope of the claims.

## Claims

1. An audio play method, applied to a first device and a second device, wherein the method comprises:
disabling an audio play function of the first device;
sending (S401), by the first device, a to-be-played audio signal to the second device in a frequency modulation, FM manner, so that the second device plays the to-be-played audio signal;
receiving (404), by the first device, an audio signal from an environment in which the first device is located; and
if the first device determines that the second device does not operate on the same FM carrier frequency as the first device by determining (S404) that the received audio signal does not match the to-be-played audio signal, sending, by the first device, a frequency adjustment request to the second device,
wherein it is determined that the second device does not operate on the same FM carrier frequency as the first device by determining (S404) that the received audio signal does not match the to-be-played audio signal when the received audio signal does not include a same signal feature as the to-be-played audio signal, wherein the signal feature includes a waveform feature or a speech content; and wherein the frequency adjustment request comprises an FM carrier frequency on which the first device operates and is used to instruct the second device to implement FM carrier frequency synchronization between the second device and the first device to adjust its FM carrier frequency on which the second device operates to the FM carrier frequency on which the first device operates;
wherein the sending, by the first device, a frequency adjustment request to the second device comprises:
sending (S406), by the first device, the frequency adjustment request to the second device by using a wireless connection between the first device and the second device, wherein the wireless connection comprises any one of the following connections: a wireless fidelity Wi-Fi connection, a Bluetooth BT connection, a second generation 2G mobile communication connection, a third generation 3G mobile communication connection, a fourth generation 4G mobile communication connection, or a fifth generation 5G mobile communication connection; and
**characterized in that**
after the sending, by the first device, a frequency adjustment request to the second device, the method further comprises:
receiving (S802), by the first device by using the wireless connection, a frequency adjustment response sent by the second device, wherein the frequency adjustment response is used to indicate whether the second device implements the FM carrier frequency synchronization between the second device and the first device according to the frequency adjustment request; and
wherein
if the second device implements the FM carrier frequency synchronization between the second device and the first device, the frequency adjustment response carries synchronization success indication information; and if the second device does not implement the FM carrier frequency synchronization between the second device and the first device, the frequency adjustment response carries synchronization failure indication information and the current FM carrier frequency on which the second device operates; and further comprising
resending, by the first device, if the second device does not implement the FM carrier frequency synchronization between the second device and the first device, a frequency adjustment response based on a difference between the current FM carrier frequency on which the second device operates and the FM carrier frequency on which the first device operates.

2. The method according to claim 1, wherein after the sending, by the first device, a to-be-played audio signal to a second device in a frequency modulation FM manner, the method further comprises:
buffering (S702), by the first device, the to-be-played audio signal in a first specified time period;
the receiving (S404), by the first device, an audio signal from an environment in which the first device is located comprises:
receiving (S702), by the first device, the audio signal in a second specified time period from the environment in which the first device is located; wherein the second specified time period and the first specified time period have overlapping duration; and
that the first device determines that the received audio signal does not match the to-be-played audio signal comprises:
determining (S703), by the first device, that the audio signal received in the overlapping duration does not match the to-be-played audio signal buffered in the overlapping duration in terms of at least one of the following features: a signal waveform and audio content.

3. A device (900, 1100), wherein the device (900, 1100) disables an audio play function of the device, and the device (900, 1100) comprises a sending module (901), a receiving module (902), and a processing module (903);
the sending module (901) is configured to send a to-be-played audio signal to a second device in a frequency modulation FM manner, so that the second device plays the to-be-played audio signal;
the receiving module (902) is configured to receive an audio signal from an environment in which the device is located;
the processing module (903) is configured to determine whether the second device does operate on the same FM carrier frequency as the first device by determining whether the audio signal received by the receiving module matches the to-be-played audio signal; and
the sending module (901) is further configured to: if the processing module determines that the received audio signal does not match the to-be-played audio signal, wherein it is determined that the received audio signal does not match the to-be-played audio signal when the received audio signal does not include a same signal feature as the to-be-played audio signal, wherein the signal feature includes a waveform feature or a speech content, send a frequency adjustment request to the second device, wherein the frequency adjustment request comprises an FM carrier frequency on which the device operates and is used to instruct the second device to implement FM carrier frequency synchronization between the second device and the device to adjust its FM carrier frequency on which the second device operates to the FM carrier frequency on which the device operates;
wherein
the sending module (901) is further configured to send the frequency adjustment request to the second device by using a wireless connection between the device and the second device, wherein the wireless connection comprises any one of the following connections: a wireless fidelity Wi-Fi connection, a Bluetooth BT connection, a second generation 2G mobile communication connection, a third generation 3G mobile communication connection, a fourth generation 4G mobile communication connection, and a fifth generation 5G mobile communication connection; and
**characterized in that**
the receiving module (902) is configured to receive
a frequency adjustment response sent by the second device, wherein the frequency adjustment response is used to indicate whether the second device implements the FM carrier frequency synchronization between the second device and the first device according to the frequency adjustment request; and
wherein
if the second device implements the FM carrier frequency synchronization between the second device and the first device, the frequency adjustment response carries synchronization success indication information; and if the second device does not implement the FM carrier frequency synchronization between the second device and the first device, the frequency adjustment response carries synchronization failure indication information and the current FM carrier frequency on which the second device operates; and
wherein the sending module (901) is further configured to resend, if the second device does not implement the FM carrier frequency synchronization between the second device and the first device, a frequency adjustment response based on a difference between the current FM carrier frequency on which the second device operates and the FM carrier frequency on which the first device operates.

## Patentansprüche

1. Audiowiedergabeverfahren, das auf eine erste Vorrichtung und eine zweite Vorrichtung angewendet wird, wobei das Verfahren Folgendes umfasst:
Deaktivieren einer Audiowiedergabefunktion der ersten Vorrichtung;
Senden (S401) eines wiederzugebenden Audiosignals durch die erste Vorrichtung an die zweite Vorrichtung in einer Frequenzmodulationsweise, FM-Weise, sodass die zweite Vorrichtung das wiederzugebende Audiosignal wiedergibt;
Empfangen (404) eines Audiosignals von einer Umgebung, in der sich die erste Vorrichtung befindet, durch die erste Vorrichtung; und
falls die erste Vorrichtung bestimmt, dass die zweite Vorrichtung nicht auf derselben FM-Trägerfrequenz arbeitet wie die erste Vorrichtung, durch Bestimmen (S404), dass das empfangene Audiosignal nicht mit dem wiederzugebenden Audiosignal übereinstimmt, Senden, durch die erste Vorrichtung, einer Frequenzanpassungsanforderung an die zweite Vorrichtung, wobei bestimmt wird, dass die zweite Vorrichtung nicht auf der gleichen FM-Trägerfrequenz arbeitet wie die erste Vorrichtung, durch Bestimmen (S404), dass das empfangene Audiosignal nicht mit dem wiederzugebenden Audiosignal übereinstimmt, wenn das empfangene Audiosignal nicht ein gleiches Signalmerkmal wie das wiederzugebende Audiosignal beinhaltet, wobei das Signalmerkmal ein Wellenformmerkmal oder einen Sprachinhalt beinhaltet; und
wobei die Frequenzanpassungsanforderung eine FM-Trägerfrequenz umfasst, auf der die erste Vorrichtung arbeitet, und verwendet wird, um die zweite Vorrichtung anzuweisen, eine FM-Trägerfrequenzsynchronisation zwischen der zweiten Vorrichtung und der ersten Vorrichtung zu implementieren, um ihre FM-Trägerfrequenz, auf der die zweite Vorrichtung arbeitet, an die FM-Trägerfrequenz anzupassen, auf der die erste Vorrichtung arbeitet;
wobei das Senden, durch die erste Vorrichtung, einer Frequenzanpassungsanforderung an die zweite Vorrichtung Folgendes umfasst:
Senden (S406), durch die erste Vorrichtung, der Frequenzanpassungsanforderung an die zweite Vorrichtung unter Verwendung einer drahtlosen Verbindung zwischen der ersten Vorrichtung und der zweiten Vorrichtung, wobei die drahtlose Verbindung eine der folgenden Verbindungen umfasst: eine Wireless-Fidelity-Verbindung, Wi-Fi-Verbindung, eine Bluetooth-Verbindung, BT-Verbindung, eine Mobilfunkverbindung der zweiten Generation, 2G-Mobilfunkverbindung, eine Mobilfunkverbindung der dritten Generation, 3G-Mobilfunkverbindung, eine Mobilfunkverbindung der vierten Generation, 4G-Mobilfunkverbindung, oder eine Mobilfunkverbindung der fünften Generation, 5G-Mobilfunkverbindung; und
**dadurch gekennzeichnet, dass**
nach dem Senden einer Frequenzanpassungsanforderung an die zweite Vorrichtung durch die erste Vorrichtung das Verfahren ferner Folgendes umfasst:
Empfangen (S802), durch die erste Vorrichtung, durch Verwenden der drahtlosen Verbindung, einer Frequenzanpassungsantwort, die durch die zweite Vorrichtung gesendet wird, wobei die Frequenzanpassungsantwort verwendet wird, um anzugeben, ob die zweite Vorrichtung die FM-Trägerfrequenzsynchronisation zwischen der zweiten Vorrichtung und der ersten Vorrichtung gemäß der Frequenzanpassungsanforderung implementiert; und
wobei
falls die zweite Vorrichtung die FM-Trägerfrequenzsynchronisation zwischen der zweiten Vorrichtung und der ersten Vorrichtung implementiert, die Frequenzanpassungsantwort Synchronisationserfolgsindikationsinformationen enthält; und
falls die zweite Vorrichtung die FM-Trägerfrequenzsynchronisation zwischen der zweiten Vorrichtung und der ersten Vorrichtung nicht implementiert, die Frequenzanpassungsantwort Synchronisationsfehlerindikationsinformationen und die aktuelle FM-Trägerfrequenz enthält, auf der die zweite Vorrichtung arbeitet; und ferner umfassend
erneutes Senden einer Frequenzanpassungsantwort durch die erste Vorrichtung, falls die zweite Vorrichtung die FM-Trägerfrequenzsynchronisation zwischen der zweiten Vorrichtung und der ersten Vorrichtung nicht implementiert, basierend auf einer Differenz zwischen der aktuellen FM-Trägerfrequenz, auf der die zweite Vorrichtung arbeitet, und der FM-Trägerfrequenz, auf der die erste Vorrichtung arbeitet.

2. Verfahren nach Anspruch 1, wobei nach dem Senden eines wiederzugebenden Audiosignals durch die erste Vorrichtung an eine zweite Vorrichtung in einer Frequenzmodulations-Weise, FM-Weise, das Verfahren ferner Folgendes umfasst:
Zwischenspeichern (S702) des wiederzugebenden Audiosignals durch die erste Vorrichtung in einem ersten spezifizierten Zeitraum;
das Empfangen (S404) eines Audiosignals von einer Umgebung, in der sich die erste Vorrichtung befindet, durch die erste Vorrichtung Folgendes umfasst:
Empfangen (S702) des Audiosignals in einem zweiten spezifizierten Zeitraum von der Umgebung, in der sich die erste Vorrichtung befindet, durch die erste Vorrichtung; wobei der zweite spezifizierte Zeitraum und der erste spezifizierte Zeitraum eine überlappende Dauer aufweisen; und
dass die erste Vorrichtung bestimmt, dass das empfangene Audiosignal nicht mit dem wiederzugebenden Audiosignal übereinstimmt, Folgendes umfasst:
Bestimmen (S703), durch die erste Vorrichtung, dass das Audiosignal, das in der überlappenden Dauer empfangen wird, nicht mit dem wiederzugebenden Audiosignal, das in der überlappenden Dauer gepuffert wird, hinsichtlich mindestens eines der folgenden Merkmale übereinstimmt: einer Signalwellenform und Audioinhalt.

3. Vorrichtung (900, 1100), wobei die Vorrichtung (900, 1100) eine Audiowiedergabefunktion der Vorrichtung deaktiviert, und die Vorrichtung (900, 1100) ein Sendemodul (901), ein Empfangsmodul (902) und ein Verarbeitungsmodul (903) umfasst; das Sendemodul (901) dazu konfiguriert ist, ein wiederzugebendes Audiosignal in einer Frequenzmodulations-Weise, FM-Weise, an eine zweite Vorrichtung zu senden, sodass das zweite Vorrichtung das wiederzugebende Audiosignal wiedergibt;
das Empfangsmodul (902) dazu konfiguriert ist, ein Audiosignal von einer Umgebung zu empfangen, in der sich die Vorrichtung befindet;
das Verarbeitungsmodul (903) dazu konfiguriert ist, zu bestimmen, ob die zweite Vorrichtung auf der gleichen FM-Trägerfrequenz arbeitet wie die erste Vorrichtung, durch Bestimmen, ob das Audiosignal, das durch das Empfangsmodul empfangen wird, mit dem wiederzugebenden Audiosignal übereinstimmt; und
das Sendemodul (901) ferner zu Folgendem konfiguriert ist: falls das Verarbeitungsmodul bestimmt, dass das empfangene Audiosignal nicht mit dem wiederzugebenden Audiosignal übereinstimmt, wobei bestimmt wird, dass das empfangene Audiosignal nicht mit dem wiederzugebenden Audiosignal übereinstimmt, wenn das empfangene Audiosignal nicht ein gleiches Signalmerkmal wie das wiederzugebende Audiosignal beinhaltet, wobei das Signalmerkmal ein Wellenformmerkmal oder einen Sprachinhalt beinhaltet, Senden einer Frequenzanpassungsanforderung an die zweite Vorrichtung, wobei die Frequenzanpassungsanforderung eine FM-Trägerfrequenz umfasst, auf der die Vorrichtung arbeitet, und verwendet wird, um die zweite Vorrichtung anzuweisen, eine FM-Trägerfrequenzsynchronisation zwischen der zweiten Vorrichtung und der Vorrichtung zu implementieren, um ihre FM-Trägerfrequenz, auf der die zweite Vorrichtung arbeitet, an die FM-Trägerfrequenz anzupassen, auf der die Vorrichtung arbeitet; wobei
das Sendemodul (901) ferner dazu konfiguriert ist, die Frequenzanpassungsanforderung an die zweite Vorrichtung unter Verwendung einer drahtlosen Verbindung zwischen der Vorrichtung und der zweiten Vorrichtung zu senden, wobei die drahtlose Verbindung eine der folgenden Verbindungen umfasst: eine Wireless-Fidelity-Verbindung, Wi-Fi-Verbindung, eine Bluetooth-Verbindung, BT-Verbindung, eine Mobilfunkverbindung der zweiten Generation, 2G-Mobilfunkverbindung, eine Mobilfunkverbindung der dritten Generation, 3G-Mobilfunkverbindung, eine Mobilfunkverbindung der vierten Generation, 4G-Mobilfunkverbindung, oder eine Mobilfunkverbindung der fünften Generation, 5G-Mobilfunkverbindung; und
**dadurch gekennzeichnet, dass**
das Empfangsmodul (902) dazu konfiguriert ist, eine Frequenzanpassungsantwort, die durch die zweite Vorrichtung gesendet wird, zu empfangen, wobei die Frequenzanpassungsantwort verwendet wird, um anzugeben, ob die zweite Vorrichtung die FM-Trägerfrequenzsynchronisation zwischen der zweiten Vorrichtung und der ersten Vorrichtung gemäß der Frequenzanpassungsanforderung implementiert; und
wobei
falls die zweite Vorrichtung die FM-Trägerfrequenzsynchronisation zwischen der zweiten Vorrichtung und der ersten Vorrichtung implementiert, die Frequenzanpassungsantwort Synchronisationserfolgsindikationsinformationen enthält; und wenn die zweite Vorrichtung die FM-Trägerfrequenzsynchronisation zwischen der zweiten Vorrichtung und der ersten Vorrichtung nicht implementiert, die Frequenzanpassungsantwort Synchronisationsfehlerindikationsinformationen und die aktuelle FM-Trägerfrequenz enthält, auf der die zweite Vorrichtung arbeitet; und
wobei das Sendemodul (901) ferner dazu konfiguriert ist, eine Frequenzanpassungsantwort erneut zu senden, falls die zweite Vorrichtung die FM-Trägerfrequenzsynchronisation zwischen der zweiten Vorrichtung und der ersten Vorrichtung nicht implementiert, basierend auf einer Differenz zwischen der aktuellen FM-Trägerfrequenz, auf der die zweite Vorrichtung arbeitet, und der FM-Trägerfrequenz, auf der die erste Vorrichtung arbeitet.

## Revendications

1. Procédé de lecture audio, appliqué à un premier dispositif et à un second dispositif, dans lequel le procédé comprend :
la désactivation d'une fonction de lecture audio du premier dispositif ;
l'envoi (S401), par le premier dispositif, d'un signal audio à lire au second dispositif selon une modulation de fréquence, FM, de sorte que le second dispositif lit le signal audio à lire ;
la réception (404), par le premier dispositif, d'un signal audio provenant d'un environnement dans lequel est situé le premier dispositif ; et
si le premier dispositif détermine que le second dispositif ne fonctionne pas sur la même fréquence porteuse FM que le premier dispositif en déterminant (S404) que le signal audio reçu ne correspond pas au signal audio à lire, l'envoi, par le premier dispositif, d'une requête d'ajustement de fréquence au second dispositif,
dans lequel il est déterminé que le second dispositif ne fonctionne pas sur la même fréquence porteuse FM que le premier dispositif en déterminant (S404) que le signal audio reçu ne correspond pas au signal audio à lire lorsque le signal audio reçu ne comporte pas une même caractéristique de signal que le signal audio à lire, dans lequel la caractéristique de signal comporte une caractéristique de forme d'onde ou un contenu vocal ; et dans lequel la requête d'ajustement de fréquence comprend une fréquence porteuse FM sur laquelle le premier dispositif fonctionne et est utilisée pour ordonner au second dispositif de mettre en œuvre une synchronisation de fréquence porteuse FM entre le second dispositif et le premier dispositif pour ajuster sa fréquence porteuse FM sur laquelle le second dispositif fonctionne à la fréquence porteuse FM sur laquelle le premier dispositif fonctionne ;
dans lequel l'envoi, par le premier dispositif, d'une requête d'ajustement de fréquence au second dispositif comprend :
l'envoi (S406), par le premier dispositif, de la requête d'ajustement de fréquence au second dispositif en utilisant une connexion sans fil entre le premier dispositif et le second dispositif, dans lequel la connexion sans fil comprend l'une quelconque des connexions suivantes : une connexion Wi-Fi de fidélité sans fil, une connexion Bluetooth BT, une connexion de communication mobile 2G de seconde génération, une connexion de communication mobile 3G de troisième génération, une connexion de communication mobile 4G de quatrième génération, ou une connexion de communication mobile 5G de cinquième génération ; et
**caractérisé en ce que**
après l'envoi, par le premier dispositif, d'une requête d'ajustement de fréquence au second dispositif, le procédé comprend également :
la réception (S802), par le premier dispositif en utilisant la connexion sans fil, d'une réponse d'ajustement de fréquence envoyée par le second dispositif, dans lequel la réponse d'ajustement de fréquence est utilisée pour indiquer si le second dispositif met en œuvre la synchronisation de fréquence porteuse FM entre le second dispositif et le premier dispositif selon la requête d'ajustement de fréquence ; et
dans lequel
si le second dispositif met en œuvre la synchronisation de fréquence de porteuse FM entre le second dispositif et le premier dispositif, la réponse d'ajustement de fréquence porte des informations d'indication de réussite de synchronisation ; et
si le second dispositif ne met pas en œuvre la synchronisation de fréquence de porteuse FM entre le second dispositif et le premier dispositif, la réponse d'ajustement de fréquence porte des informations d'indication d'échec de synchronisation et la fréquence de porteuse FM actuelle sur laquelle le second dispositif fonctionne ; et comprenant également
le fait de renvoyer, par le premier dispositif, si le second dispositif ne met pas en œuvre la synchronisation de fréquence de porteuse FM entre le second dispositif et le premier dispositif, une réponse d'ajustement de fréquence sur la base d'une différence entre la fréquence de porteuse FM actuelle sur laquelle le second dispositif fonctionne et la fréquence de porteuse FM sur laquelle le premier dispositif fonctionne.

2. Procédé selon la revendication 1, dans lequel après l'envoi, par le premier dispositif, d'un signal audio à lire à un second dispositif selon une modulation de fréquence FM, le procédé comprend également :
la mise en mémoire tampon (S702), par le premier dispositif, du signal audio à lire dans un délai spécifié ;
la réception (S404), par le premier dispositif, d'un signal audio provenant d'un environnement dans lequel est situé le premier dispositif comprend :
la réception (S702), par le premier dispositif, du signal audio dans un second délai spécifié à partir de l'environnement dans lequel le premier dispositif est situé ; dans lequel le second délai spécifié et le premier délai spécifié ont une durée de chevauchement ; et
que le premier dispositif détermine que le signal audio reçu ne correspond pas au signal audio à lire comprend :
la détermination (S703), par le premier dispositif, que le signal audio reçu dans la durée de chevauchement ne correspond pas au signal audio à lire mis en mémoire tampon dans la durée de chevauchement en termes d'au moins l'une des caractéristiques suivantes : une forme d'onde de signal et un contenu audio.

3. Dispositif (900, 1100), dans lequel le dispositif (900, 1100) désactive une fonction de lecture audio du dispositif, et le dispositif (900, 1100) comprend un module d'envoi (901), un module de réception (902) et un module de traitement (903) ;
le module d'envoi (901) est configuré pour envoyer un signal audio à lire à un second dispositif selon une modulation de fréquence FM, de sorte que le second dispositif lit le signal audio à lire ;
le module de réception (902) est configuré pour recevoir un signal audio provenant d'un environnement dans lequel est situé le premier dispositif ;
le module de traitement (903) est configuré pour déterminer si le second dispositif fonctionne sur la même fréquence porteuse FM que le premier dispositif en déterminant si le signal audio reçu par le module de réception correspond au signal audio à lire ; et
le module d'envoi (901) est également configuré pour : si le module de traitement détermine que le signal audio reçu ne correspond pas au signal audio à lire, dans lequel il est déterminé que le signal audio reçu ne correspond pas au signal audio à lire lorsque le signal audio reçu ne comporte pas la même caractéristique de signal que le signal audio à lire, dans lequel la caractéristique de signal comporte une caractéristique de forme d'onde ou un contenu vocal, envoyer une requête d'ajustement de fréquence au second dispositif, dans lequel la requête d'ajustement de fréquence comprend une fréquence porteuse FM sur laquelle le dispositif fonctionne et est utilisée pour ordonner au second dispositif de mettre en œuvre une synchronisation de fréquence porteuse FM entre le second dispositif et le dispositif pour ajuster sa fréquence porteuse FM sur laquelle le second dispositif fonctionne à la fréquence porteuse FM sur laquelle le dispositif fonctionne ;
dans lequel
le module d'envoi (901) est également configuré pour envoyer la requête d'ajustement de fréquence au second dispositif en utilisant une connexion sans fil entre le dispositif et le second dispositif, dans lequel la connexion sans fil comprend l'une quelconque des connexions suivantes : une connexion Wi-Fi de fidélité sans fil, une connexion Bluetooth BT, une connexion de communication mobile 2G de seconde génération, une connexion de communication mobile 3G de troisième génération, une connexion de communication mobile 4G de quatrième génération, ou une connexion de communication mobile 5G de cinquième génération ; et
**caractérisé en ce que**
le module de réception (902) est configuré pour recevoir une réponse d'ajustement de fréquence envoyée par le second dispositif, dans lequel la réponse d'ajustement de fréquence est utilisée pour indiquer si le second dispositif met en œuvre la synchronisation de fréquence porteuse FM entre le second dispositif et le premier dispositif selon la requête d'ajustement de fréquence ; et
dans lequel
si le second dispositif met en œuvre la synchronisation de fréquence de porteuse FM entre le second dispositif et le premier dispositif, la réponse d'ajustement de fréquence porte des informations d'indication de réussite de synchronisation ; et si le second dispositif ne met pas en œuvre la synchronisation de fréquence de porteuse FM entre le second dispositif et le premier dispositif, la réponse d'ajustement de fréquence porte des informations d'indication d'échec de synchronisation et la fréquence de porteuse FM actuelle sur laquelle le second dispositif fonctionne ; et
dans lequel le module d'envoi (901) est également configuré pour renvoyer, si le second dispositif ne met pas en œuvre la synchronisation de fréquence de porteuse FM entre le second dispositif et le premier dispositif, une réponse d'ajustement de fréquence sur la base d'une différence entre la fréquence de porteuse FM actuelle sur laquelle le second dispositif fonctionne et la fréquence de porteuse FM sur laquelle le premier dispositif fonctionne.
